(19) Europäisches Patentamt
European Patent Office
Office européen des brevets

(11) EP 4 276 476 A1

(12) DEMANDE DE BREVET EUROPEEN

(43) Date de publication:
15.11.2023 Bulletin 2023/46

(51) Classification Internationale des Brevets (IPC):
G01Q 10/06 (2010.01)     G01Q 60/30 (2010.01)

(21) Numéro de dépôt: 23172891.6

(52) Classification Coopérative des Brevets (CPC):
G01Q 60/30; G01Q 10/065

(22) Date de dépôt: 11.05.2023

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
KH MA MD TN

(30) Priorité: 12.05.2022 FR 2204531

(71) Demandeur: Commissariat à l'énergie atomique
et aux énergies alternatives
75015 Paris (FR)

(72) Inventeurs:
• BOROWIK, Lukasz
38054 Grenoble Cedex 09 (FR)
• MARIOLLE, Denis
38054 Grenoble Cedex 09 (FR)
• VALLOIRE, Hugo
38054 Grenoble Cedex 09 (FR)

(74) Mandataire: Atout PI Laplace
Immeuble "Visium"
22, avenue Aristide Briand
94117 Arcueil Cedex (FR)

(54) **PROCÉDÉ DE CARACTÉRISATION FERROÉLECTRIQUE D'UN ÉCHANTILLON PIÉZOÉLECTRIQUE**

(57) L'invention concerne un dispositif de caractérisation d'un échantillon piézoélectrique ayant une électrode inférieure et une surface supérieure, le dispositif comprenant :
- une pointe conductrice placée à une extrémité d'un levier et destinée à être placée en contact avec un point de la surface supérieure; l'ensemble formé par la pointe, l'échantillon et l'électrode ayant une fréquence de résonance variable ;
- un générateur de tension configuré pour appliquer, entre l'électrode inférieure et la pointe conductrice, un signal de caractérisation à une première fréquence ;
- une chaine d'acquisition configurée pour générer un signal de mesure de la réponse électromécanique de l'échantillon ; et
- un circuit de commande configuré pour commander le générateur de tension en générant un signal de commande à partir du signal de mesure reçu par l'intermédiaire d'une boucle de rétroaction.
La première fréquence étant maintenue égale à la fréquence de résonance par le circuit de commande.

FIG.1a

Processed by Luminess, 75001 PARIS (FR)

**Description**

**Champ d'application**

La présente invention concerne le domaine de la caractérisation de matériaux en utilisant la technique de microscopie à force atomique. Plus particulièrement, l'invention concerne un procédé de caractérisation ferroélectrique d'un échantillon piézoélectrique avec un fonctionnement en mode « microscopie à force piézoélectrique avec une spectroscopie de commutation de la polarisation » SS-PFM (acronyme de l'expression en anglais Switching Spectroscopy Piezoresponse Force Microscopy).

**Problème soulevé**

Les couches minces en matériaux piézoélectriques et/ou ferroélectriques sont utilisées dans de nombreuses applications en microélectronique. On cite à titre d'exemple non limitatif les applications de dispositifs radiofréquences (filtres 4G, 5G, 6G), les mémoires émergentes pour les applications embarquées (FeRAM, FeFET) ou encore les technologies de capteurs/actionneurs miniaturisés (MEMS).

La mesure quantitative des propriétés ferroélectriques et piézoélectriques des couches minces présente un défi technique et expérimental. En effet, ce type de caractérisation est sensible à plusieurs artefacts de mesure tels que l'effet électrostatique induit par la mesure elle-même.

La microscopie à force piézoélectrique avec une spectroscopie de commutation de la polarisation SS-PFM présente un candidat prometteur pour réaliser la caractérisation des propriétés ferroélectriques et piézoélectriques. Pour un échantillon comprenant une couche en un matériau piézoélectrique et ferroélectrique, cette technique permet de déterminer localement sur une surface de l'échantillon :

- La répartition et l'organisation des domaines ferroélectriques locaux,

- L'influence des domaines ferroélectriques locaux sur les propriétés piézo/ferroélectriques macroscopiques de l'échantillon, et

- Les mécanismes électromécaniques fondamentaux intervenant au sein du matériau.

La « microscopie à force piézoélectrique avec une spectroscopie de commutation de la polarisation » SS-PFM est un mode particulier de « la microscopie à force piézoélectrique » PFM (acronyme de l'expression en anglais Piezoresponse Force Microscopy). La « microscopie à force piézoélectrique » PFM est elle-même un mode de fonctionnement particulier de la « microscopie à force atomique » AFM (acronyme de l'expression en anglais Atomic Force Microscopy). Ainsi, pour bien comprendre le contexte de l'invention, nous allons commencer par expliquer d'une manière générale le fonctionnement de la microscopie à force atomique AFM et de la microscopie à force piézoélectrique PFM.

La microscopie à force atomique AFM est une technique de microscopie permettant de mesurer la topographie d'une surface d'un matériau avec une précision de l'ordre atomique. Un microscope à force atomique dispose d'une pointe fine solidaire avec un levier. L'ensemble du levier et de la pointe présentent des dimensions de l'ordre du micromètre. La pointe est mise en contact avec la surface de l'échantillon. La pointe est déplacée de manière à balayer la surface de l'échantillon. Une variation de topographie de la surface exerce une force sur la pointe induisant la déformation du levier. En mesurant cette déformation à l'aide d'un laser, on peut déduire le profil de la surface avec une résolution atomique et obtenir également des informations sur les propriétés élastiques et mécaniques de la surface.

La microscopie à force piézoélectrique PFM est un mode de fonctionnement particulier de la microscopie à force atomique AFM. Ce mode permet l'acquisition simultanée de la topographie et de la réponse piézoélectrique d'un échantillon piézoélectrique. Une couche conductrice est déposée sur une face de l'échantillon piézoélectrique pour réaliser une électrode inférieure. Lorsque le mode de fonctionnement PFM est choisi, un signal électrique alternatif de stimulation est injecté entre l'électrode inférieure et la pointe en contact avec la surface supérieure de l'échantillon. La pointe se comporte comme une électrode supérieure de l'ensemble pointe - couche piézoélectrique - électrode inférieure. Cela induit une réponse électromécanique locale de l'échantillon piézoélectrique. La réponse consiste en des déplacements latéraux et/ou verticaux proportionnellement aux caractéristiques ferroélectriques de l'échantillon et au signal injecté. Ces déplacements sont mesurés grâce à la réflexion d'un laser incident sur l'extrémité du levier vers une photodiode à quatre quadrants, par détection différentielle.

La microscopie à force piézoélectrique avec une spectroscopie de commutation de la polarisation SS-PFM est un mode particulier de « la microscopie à force piézoélectrique » PFM. La microscopie SS-PFM permet d'exploiter les caractéristiques piézoélectriques et ferroélectriques de l'échantillon avec plus de précision. En plus du premier signal électrique sinusoïdal habituellement utilisé en mode PFM, un signal créneau modulant un second signal périodique est appliqué entre la pointe et l'électrode inférieure. Nous allons décrire ce signal d'une manière plus détaillée dans la suite de la description. Cette combinaison de signaux permet de provoquer des commutations locales de la polarisation électrique locale de l'échantillon tout en mesurant la réponse électromécanique de l'échantillon. Les commutations permettent d'obtenir une courbe d'hystérésis locale pour chaque point balayé par la pointe.

L'ensemble constitué par le levier, la pointe, l'échantillon piézoélectrique et l'électrode forme un système mécanique local. Ce système mécanique présente une fréquence de résonance propre, notée $f_0$. La fréquence de résonance dépend des caractéristiques géométriques et des matériaux qui constituent chaque élément de l'ensemble, ainsi que de la force du contact entre la pointe et l'échantillon. Ainsi, deux modes de fonctionnement sont envisageables : un fonctionnement en résonance et un fonctionnement hors résonance.

D'une part, le fonctionnement en résonance consiste à utiliser un premier signal électrique sinusoïdal ayant une fréquence $f_1$ égale à la fréquence de résonance $f_0$. Cela permet de maximiser l'amplitude mesurée de la réponse électromécanique de l'échantillon. En effet l'amplitude mesurée est multipliée par le facteur de qualité du pic de résonance, ayant pour ordre de grandeur 100. Ainsi, la sensibilité de la mesure et le rapport signal sur bruit sont améliorés. Cependant, la fréquence de résonance $f_0$ peut fluctuer avec les artefacts de mesure lors de la caractérisation. Ces fluctuations résultent à titre d'exemple de la variation de la pression appliquée par la pointe sur la surface de l'échantillon. Cette dernière peut varier à cause de changement de topographie de la surface de l'échantillon, de changement des propriétés mécaniques élastiques de l'échantillon, ou encore de changement d'interactions coulombiennes entre la pointe et l'échantillon. L'usure de la pointe peut aussi engendrer la dérive de la fréquence de résonance de l'ensemble. On note la nouvelle valeur de la fréquence de résonance $f_0'$. La fréquence du premier signal électrique sinusoïdal $f_1$ n'est plus alignée avec la nouvelle fréquence de résonance $f_0'$. Le système ne fonctionne plus en résonance. L'amplitude mesurée varie, sans que l'amplitude réelle du pic de résonance ne soit nécessairement modifiée. Il en résulte que le fonctionnement en résonance présente une forte dépendance aux dérives de la fréquence de résonance.

D'autre part, le fonctionnement hors résonance consiste à utiliser un premier signal électrique sinusoïdal ayant une fréquence $f_1$ sensiblement inférieure à la fréquence de résonance $f_0$. Ce mode présente l'avantage d'une mise en oeuvre simple et permet d'avoir un signal faiblement dépendant d'artefacts de mesure (usure de la pointe, variation de la force de contact pointe - échantillon...). L'inconvénient de ce mode de fonctionnement consiste en une sensibilité et un rapport signal sur bruit limités. Plus particulièrement, ce problème empêche les mesures pour des échantillons à faibles coefficients piézoélectriques.

Ainsi, il existe un besoin pour développer un procédé de caractérisation par « microscopie à force piézoélectrique avec une spectroscopie de commutation de la polarisation » SS-PFM combinant une sensibilité et un rapport signal sur bruit amélioré tout en étant indépendant des fluctuations et des dérives de la fréquence de résonance $f_0$ du système.

**Art antérieur/ Restrictions de l'état de l'art**

Les techniques existantes de « microscopie à force piézoélectrique avec une spectroscopie de commutation de la polarisation » SS-PFM proposent la solution de « balayage de fréquence » pour résoudre le problème de dérives de la fréquence de résonance. Lors d'un fonctionnement en mode résonance, durant chaque étape de lecture, la fréquence du premier signal électrique sinusoïdal $f_1$ est variée selon une plage de fréquences prédéfinie. Il s'agit alors d'un balayage en fréquence du signal de lecture afin de détecter le pic de résonance du système qui risque de varier d'une étape de lecture à une autre. Cette solution présente l'inconvénient d'une grande quantité de mesures à cause du balayage fréquentiel. De plus, le traitement des mesures est complexe. De plus, cela rallonge la durée de la caractérisation. Il en résulte un accroissement considérable des besoins en ressources de stockage de données et en moyens de calcul. Un autre inconvénient consiste à se limiter pour chaque étape de lecture à une unique mesure correspondant à la valeur maximale du pic détecté. Ceci augmente le risque d'erreur de mesure et diminue sa fiabilité.

**Réponse au problème et apport solution**

Pour pallier les limitations des solutions existantes en ce qui concerne l'élimination de l'effet des fluctuations et des dérives de la fréquence de résonance $f_0$ du système de mesure, l'invention propose un procédé de caractérisation de type SS-PFM dans lequel la fréquence du premier signal électrique sinusoïdal $f_1$ est maintenue égale à la fréquence de résonance du système par un système de « suivi de résonance à double fréquence » DFRT couplé au microscope à force atomique. L'acronyme DFRT correspond à l'expression anglaise "Dual Frequency Résonance Tracking".

Cette solution permet d'éliminer l'impact des dérives de la fréquence de résonance $f_0$ du système de mesure contrairement au fonctionnement en mode résonance classique.

De plus, le procédé selon l'invention présente l'avantage d'une sensibilité améliorée et un rapport signal sur bruit élevé par rapport au fonctionnement en mode hors résonance classique.

Le procédé selon l'invention présente en outre l'avantage d'une réduction considérable des temps de mesure et de la taille des données de mesures par rapport à la solution basée sur le balayage fréquentiel. Cela permet de réduire les besoins en ressources de stockage et de calcul des données.

Le procédé selon l'invention présente en outre l'avantage d'une mise en oeuvre expérimentale simple et non coûteuse.

Le procédé selon l'invention présente en outre l'avantage de la possibilité d'obtenir une pluralité de mesures pour un seul point de la surface en un temps réduit. Cela donne la possibilité d'exploiter ses multiples mesures avec des traitements statistiques de type moyenne et écart-type. Il devient alors possible d'évaluer la pertinence des mesures et d'augmenter la fiabilité du procédé de caractérisation.

**Résumé /Revendications**

L'invention a pour objet un dispositif de caractérisation d'un échantillon piézoélectrique ayant une électrode inférieure et une surface supérieure, le dispositif comprenant :

- une pointe conductrice placée à une extrémité d'un levier et destinée à être placée en contact avec un point de la surface supérieure; l'ensemble formé par la pointe, l'échantillon et l'électrode ayant une fréquence de résonance variable,
- un générateur de tension configuré pour appliquer, entre l'électrode inférieure et la pointe conductrice, un signal de caractérisation à une première fréquence,
- une chaine d'acquisition configurée pour générer un signal de mesure de la réponse électromécanique de l'échantillon, et
- un circuit de commande configuré pour commander le générateur de tension en générant un signal de commande à partir du signal de mesure reçu par l'intermédiaire d'une boucle de rétroaction.

La première fréquence étant maintenue égale à la fréquence de résonance par le circuit de commande.

Selon un aspect particulier de l'invention, le dispositif de caractérisation comprend en outre un calculateur configuré pour tracer une courbe d'hystérésis d'amplitude et/ou de phase associée au point à partir du signal de mesure.

Selon un aspect particulier de l'invention, le générateur est configuré pour générer en outre :

- un premier signal de redressement à une deuxième fréquence supérieure à la première fréquence ;
- un second signal de redressement à une troisième fréquence inférieure à la première fréquence ;

les deux signaux de redressement présentant respectivement une amplitude inférieure à celle du signal de caractérisation et étant superposées avec le signal de caractérisation ; et
la deuxième fréquence et la troisième fréquence étant équidistantes de la première fréquence.

Selon un aspect particulier de l'invention, le signal de mesure comprend une première composante spectrale associée à la première fréquence, une seconde composante spectrale associée à la deuxième fréquence et une troisième composante spectrale associée à la troisième fréquence ;
et dans lequel le circuit de commande comprend un premier filtre destiné à extraire la seconde composante spectrale et un second filtre destiné à extraire la troisième composante spectrale.

Selon un aspect particulier de l'invention, le circuit de commande comprend un circuit comparateur configuré pour estimer si l'amplitude de la seconde composante spectrale est égale à celle de la troisième composante spectrale.

Selon un aspect particulier de l'invention, le circuit de commande comprend un régulateur pour générer le signal de commande de manière à maintenir une égalité entre l'amplitude de la seconde composante spectrale et celle de la troisième composante spectrale.

L'invention a aussi pour objet un procédé de caractérisation d'un échantillon piézoélectrique ayant une électrode inférieure et une surface supérieure, ledit procédé étant destiné à déterminer les propriétés ferroélectriques d'au moins un point de la surface dudit échantillon, le procédé étant réalisé par un dispositif comprenant une pointe conductrice placée au bout d'un levier, le procédé comprend les étapes suivantes pour l'au moins un point :

I- Mettre la pointe conductrice en contact avec la surface supérieure au niveau du point. L'ensemble formé par le levier, la pointe, l'échantillon et l'électrode ayant une fréquence de résonance variable, et
II- Appliquer entre l'électrode inférieure et la pointe conductrice, un signal de caractérisation à une première fréquence de manière à modifier localement la distribution de la polarisation électrique locale pendant une phase d'écriture et mesurer la réponse électromécanique pendant une phase de lecture.

La première fréquence est maintenue égale à la fréquence de résonance.

Selon un aspect particulier de l'invention, l'étape II) comprend les sous-étapes suivantes :

ii- appliquer pendant une durée d'écriture entre l'électrode inférieure et la pointe conductrice, le signal de caractérisation ayant une première composante continue et une première amplitude ;

iii- appliquer, pendant une durée de lecture entre l'électrode inférieure et la pointe conductrice, le signal de caractérisation ayant une seconde composante continue et la première amplitude ;

iv- mesurer, simultanément avec iii), la réponse électromécanique en phase et en amplitude de l'échantillon ; et

v- réitérer les étapes ii) à iv) en faisant varier la première composante continue selon une fonction enveloppe périodique ayant une seconde fréquence inférieure à la première fréquence, et ayant une seconde amplitude supérieure à la première amplitude; le nombre d'itérations étant suffisant pour réaliser au moins une période de la fonction périodique.

Selon un aspect particulier de l'invention, le procédé comprend en outre l'étape suivante :

vi- tracer une courbe d'hystérésis d'amplitude et/ou de phase associée au point à partir des mesures obtenues à l'étape iv) de chaque itération.

Selon un aspect particulier de l'invention, pour l'au moins un point les étapes ii) à vi) sont réitérées en faisant varier pour chaque cycle la seconde composante continue afin d'obtenir une pluralité de courbes d'hystérésis, chacune étant associée à une valeur de la seconde composante continue.

Selon un aspect particulier de l'invention, le procédé comprend en outre l'étape suivante pour l'au moins un point :

- sélectionner une courbe d'hystérésis parmi la pluralité de courbes d'hystérésis selon un critère de sélection prédéterminé.

Selon un aspect particulier de l'invention, le critère de sélection prédéterminé correspond à la courbe d'hystérésis ayant une portion de saturation ayant une pente minimum ou un décalage par rapport à l'origine minimum.

Selon un aspect particulier de l'invention, la sous-étape iii) comprend la réalisation successivement une pluralité de mesures de la réponse électromécanique en phase et en amplitude de l'échantillon.

Selon un aspect particulier de l'invention, le procédé comprend en outre l'étape suivante :

- pour chaque phase de lecture, réaliser des traitements statistiques de la pluralité de mesures de type moyenne et/ou écart-type.

Selon un aspect particulier de l'invention, le procédé est appliqué à une pluralité de points de la surface et comprend en outre l'étape suivante après l'étape v) :

- pour chaque point caractérisé, générer une liste comprenant une quantification de plusieurs caractéristiques ferroélectriques et/ou piézoélectriques et/ou électrostatiques extraites à partir de la courbe d'hystérésis associée audit point.

Selon un aspect particulier de l'invention, le procédé comprend en outre l'étape suivante :

- pour chaque caractéristique ferroélectrique extraite, générer une cartographie associée de la surface à partir des listes.

## Description détaillée

D'autres caractéristiques et avantages de la présente invention apparaîtront mieux à la lecture de la description qui suit en relation aux dessins annexés suivants :

La figure 1a illustre un mode de réalisation du dispositif expérimental selon l'invention.

La figure 1b illustre un schéma d'un circuit de suivi de résonance à double fréquence du dispositif expérimental selon l'invention.

La figure 1c illustre une analyse spectrale du signal mesuré à l'entrée du circuit de suivi de résonance à double fréquence du dispositif expérimental selon l'invention.

La figure 2 illustre un organigramme des étapes du procédé de caractérisation selon un premier mode de réalisation l'invention pour un point de la surface de l'échantillon.

La figure 3a illustre un premier mode de réalisation de la variation de la première composante continue du signal de caractérisation du procédé de caractérisation selon l'invention.

La figure 3b illustre un zoom partiel sur le signal de caractérisation pendant une itération du procédé de caractérisation selon l'invention.

Les figures 4a à 4g illustrent une succession d'itérations du procédé de caractérisation selon l'invention appliqué à un point de la surface.

La figure 5a illustre les courbes d'acquisition et de stimulation lors d'un procédé de caractérisation SS-PFM selon l'état de l'art.

La figure 5b illustre les courbes d'acquisition et de stimulation lors du procédé de caractérisation selon l'invention.

La figure 6 illustre un second mode de réalisation de la variation de la composante continue du signal de caractérisation du procédé de caractérisation selon l'invention.

La figure 7 illustre un organigramme des étapes du procédé de caractérisation selon l'invention appliqué à une pluralité de points de la surface de l'échantillon.

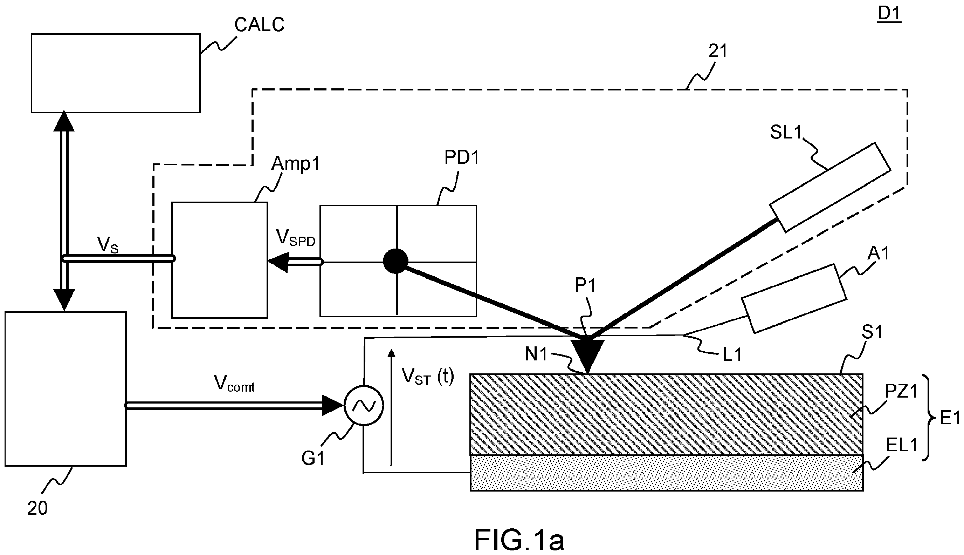

La figure 1a illustre un dispositif expérimental D1 selon l'invention. Le dispositif expérimental D1 est configuré pour mettre en oeuvre un procédé de caractérisation d'un échantillon de test E1 selon un mode de réalisation de l'invention. Le dispositif expérimental D1 comprend une pointe conductrice P1 solidaire à une extrémité d'un levier L1, un actionneur A1 pour commander mécaniquement le levier L1, une source de laser SL1, un générateur de tension G1, une photodiode à quatre quadrants PD1, un étage amplificateur AMP1, un circuit de commande 20 et un calculateur CALC .

L'échantillon de test E1 comprend une couche mince PZ1 en un matériau piézoélectrique et une couche électriquement conductrice jouant le rôle d'une électrode inférieure EL1. L'électrode inférieure EL1 est une couche déposée sur une face de la couche PZ1. La face opposée à celle de l'électrode inférieure constitue la surface à caractériser de l'échantillon, elle est notée S1.

À titre d'exemple, la couche PZ1 présente une épaisseur comprise entre 5 nm et $10\mu m$. À titre d'exemple, la couche PZ1 est réalisée en titano-zirconates de plomb PZT, en titanate de baryum BaTiO3 ou tout autre matériau piézoélectrique et ferroélectrique. À titre d'exemple, l'électrode inférieure EL1 est réalisée en cuivre ou aluminium ou platine.

La pointe P1 est destinée à être mise en contact avec la surface S1. Le point de contact noté N1 est le point à caractériser. La source de laser SL1 est placée de manière à émettre un rayon laser sur la face supérieure de la pointe P1. Le rayon laser est réfléchi par la pointe P1 vers la photodiode à quatre quadrants PD1. Au repos, le rayon laser est réfléchi sur le centre de la photodiode à quatre quadrants. Il s'agit d'un calibrage pour déterminer la référence de la mesure.

Le générateur de tension G1 génère un signal électrique alternatif de stimulation noté $V_{ST}(t)$ entre l'électrode inférieure EL1 et la pointe P1 en contact avec la surface supérieure S1 de l'échantillon E1. Le signal $V_{ST}(t)$ est utilisé pour réaliser des phases de lecture et d'écriture qui seront détaillées ultérieurement. Le générateur G1 est commandé par le circuit de commande 20 par l'intermédiaire d'un signal de commande noté $V_{cont}$. Le signal de commande $V_{cont}$ est un signal de consigne déterminant les caractéristiques fréquentielles et d'amplitude du signal de stimulation $V_{ST}(t)$.

Comme décrit précédemment, l'application du signal de stimulation $V_{ST}$ induit une réponse électromécanique locale au point N1 de la couche piézoélectrique PZ1. La réponse consiste en des déplacements latéraux ou verticaux proportionnellement aux caractéristiques piézoélectriques et ferroélectriques de l'échantillon et au signal injecté. Ces déplacements sont mesurés grâce à la réflexion du laser incident sur l'extrémité du levier L1 vers la photodiode à quatre quadrants PD1, par détection différentielle. En effet, la réponse électro-mécanique de l'échantillon engendre une déformation du levier L1. La déformation du levier L1 engendre le changement d'angle d'incidence entre le laser et la partie supérieure de la pointe ce qui dévie le laser. Cela induit un déplacement du point d'incidence du rayon laser réfléchi sur la photodiode à quatre quadrants PD1. Cela induit la génération d'un signal de mesure différentiel par la photodiode DP1, noté $V_{SPD}$. Afin de quantifier l'amplitude du signal de mesure différentiel, ce dernier est amplifié par l'étage d'amplification AMP1 qui génère un signal de mesure amplifié $V_s$. Ainsi, l'amplitude du signal $V_s$ correspond au déplacement local de l'échantillon, et la phase du signal $V_s$ correspond au déphasage entre la réponse du matériau piézoélectrique et la stimulation.

Le calculateur CALC est configuré pour traiter le signal de mesure $V_s$ afin d'extraire les caractéristiques piézoélectriques et ferroélectriques de l'échantillon et tracer une courbe d'hystérésis pour chaque point caractérisé de la surface S1.

Nous rappelons que l'ensemble constitué par le levier, la pointe, l'échantillon piézoélectrique et l'électrode présente une fréquence de résonance propre, notée $f_0$. Le circuit de commande 20 est configuré pour maintenir un fonctionnement en résonance tout au long de la caractérisation et indépendamment des dérives potentielles de la fréquence de résonance. Cette fonction est réalisée par l'intermédiaire d'une boucle de rétroaction propageant le signal de mesure amplifié $V_s$ vers le circuit de commande 20.Cela permet d'éliminer l'impact des dérives de la fréquence de résonance $f_0$ du système de mesure lors d'un fonctionnement en mode résonance.

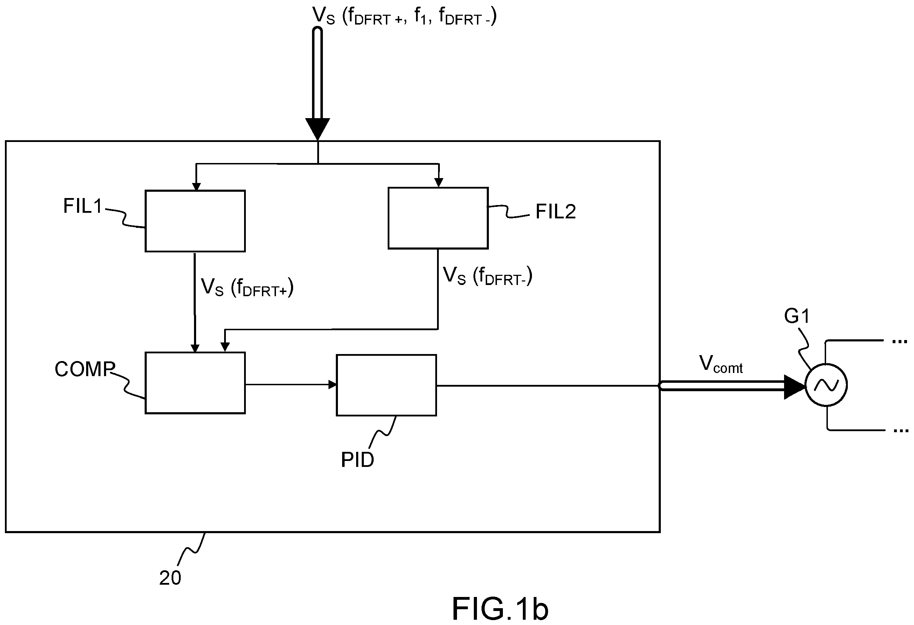

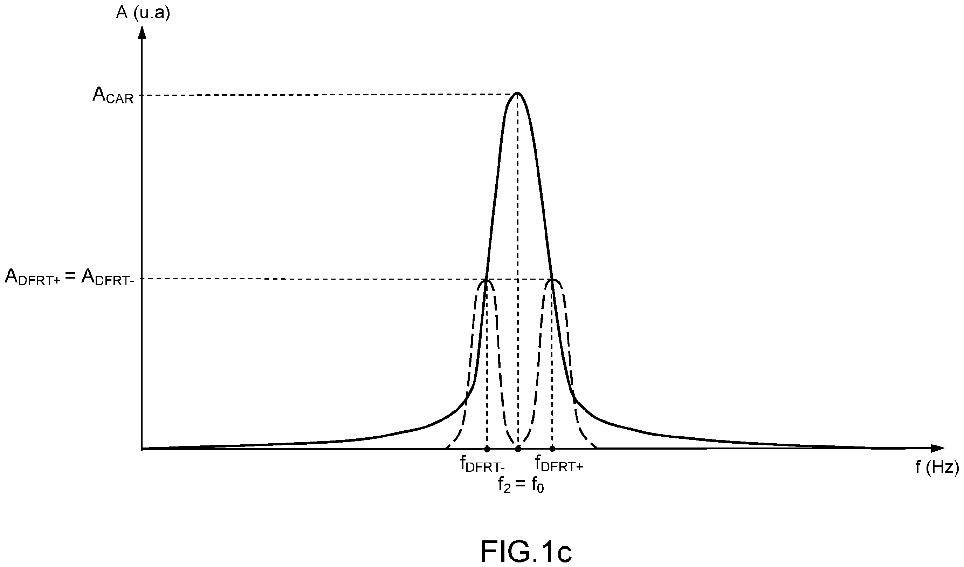

Nous allons dans ce qui suit expliquer le principe de «suivi de résonance à double fréquence» DFRT réalisé par le circuit20. La figure 1b illustre un schéma d'un exemple de circuit de commande 20 du dispositif expérimental selon l'invention. La figure 1c illustre une analyse spectrale du signal de mesure amplifié $V_s$ à l'entrée du circuit de commande 20

Le circuit de commande 20 comprend un premier circuit de filtrage fréquentiel FIL1, un second circuit de filtrage fréquentiel FIL2, un circuit comparateur COMP et régulateur PID (acronyme de proportionnel, intégral, dérivé).

Le circuit de commande 20 commande le générateur G1 pour générer un signal de stimulation $V_{ST}(t)$ obtenu par la superposition d'un signal de caractérisation $V_{CAR}(t)$ et de deux signaux de redressement $V_{DFRT+}(t)$ et $V_{DFRT-}(t)$.

$$V_{ST}(t) = V_{CAR}(t, f_1) + V_{DFRT+}(t, f_{DFRT+}) + V_{DFRT-}(t, f_{DFRT-})$$

Le signal de caractérisation $V_{CAR}(t)$ présente une amplitude supérieure à celles des deux signaux de redressement $V_{DFRT+}(t)$ et $V_{DFRT-}(t)$. Ainsi, le signal de caractérisation $V_{CAR}(t)$ est le signal utile pour stimuler l'échantillon lors de la caractérisation. D'autre part, les signaux de redressement $V_{DFRT+}(t)$ et $V_{DFRT-}(t)$ sont utilisés pour réaliser une fonction de maintien de la fréquence du signal de caractérisation $V_{CAR}(t)$ égale à la fréquence de résonance $f_0$ même en cas de dérives de cette dernière.

$$V_{CAR}(t) = V_{DC}(t) + V_{AC}(t) = V_{DC}(t) + V_0 * \sin(2\pi f_1 t + \varphi)$$

avec $V_{DC}(t)$ la composante continue du signal $V_{CAR}(t)$, $V_{AC}(t) = V_0 * \sin(2\pi f_1 t + \varphi)$ est sa composante alternative ayant une première amplitude $V_0$, une première fréquence $f_1$, et une phase initiale $\varphi$. La composante continue joue le rôle de tension de polarisation locale au niveau du point N1. La première fréquence $f_1$ est dénommée « fréquence de travail ».

La composante continue $V_{DC}(t)$ varie entre une première valeur variable $V_{DC1}(t)$et une deuxième valeur constante $V_{DC2}$. La première valeur varie $V_{DC1}(t)$ selon la fonction périodique g(t). La caractérisation locale de l'échantillon est composée d'une pluralité d'itérations. Chaque itération se décompose en une phase d'écriture et une phase de lecture. La phase d'écriture consiste à stimuler l'échantillon localement au point N1 de manière à modifier la distribution de la polarisation électrique locale par effet ferroélectrique. La phase de lecture sert à quantifier la réponse électromécanique locale avec la nouvelle distribution de polarisation électrique obtenue après la phase d'écriture. Pendant une phase d'écriture, la composante continue $V_{DC}(t)$ du signal de caractérisation est égale à la première valeur variable $V_{DC1}(t)$. Pendant une phase de lecture, la composante continue $V_{DC}(t)$ du signal de caractérisation est égale à la seconde valeur constante $V_{DC2}(t)$.

Le premier signal de redressement $V_{DFRT+}(t)$ présente une fréquence $f_{DFRT+}=f_1+f_{BW}$ avec $f_{BW}$ de l'ordre de grandeur de la fréquence supérieure à f1 correspondant à à la moitié de l'amplitude maximale du pic de résonance $f_0$. Le second signal de redressement $V_{DFRT-}(t)$ a une fréquence $f_{DFRT-}=f_1-f_{BW}$ avec $f_{BW}$ de l'ordre de grandeur de la fréquence inférieure à f1 correspondant à la moitié de l'amplitude maximale du pic de résonance $f_0$.

Les deux signaux de redressement sont superposés au signal de caractérisation $V_{CAR}(t)$. Le signal de mesure amplifié $V_s$ de la réponse électromécanique comprend trois composantes spectrales ayant chacune une amplitude mesurée : l'amplitude mesurée $A_{CAR}$ résultante du signal de caractérisation $V_{CAR}(t)$ à la fréquence $f_1$, l'amplitude mesurée $A_{DFRT+}$ résultante du premier signal de redressement $V_{DFRT+}(t)$ à la fréquence $f_{DFRT+}$ et l'amplitude mesurée $A_{DFRT-}$ résultante du second signal de redressement $V_{DFRT-}(t)$ à la fréquence $f_{DFRT-}$.

Le premier filtre FIL1 est destiné à filtrer le signal de mesure $V_s$ afin d'extraire la composante spectrale associée à la fréquence $F_{DFRT+}$ d'amplitude $A_{DFRT+}$. Le second filtre FIL2 est destiné à filtrer le signal de mesure $V_s$ afin d'extraire la composante spectrale associée à la fréquence $f_{DFRT-}$d'amplitude $A_{DFRT-}$. Le comparateur COMP est destiné à comparer l'amplitude $A_{DFRT-}$ à l'amplitude $A_{DFRT+}$. Si elles sont égales $A_{DFRT-} = A_{DFRT+}$ cela signifie que le pic de la composante spectrale associée à la fréquence $f_1$ est symétrique et que l'amplitude $A_{CAR}$ est maximale. Cela indique que la fréquence $f_0$ n'a pas dérivé et que la première fréquence $f_1$ est égale à la fréquence de résonance $f_0$.

Lorsque la fréquence de résonance $f_0$ dérive, l'égalité $f_1=f_0$ n'est plus respectée. Le pic de la composante spectrale associée à la fréquence $f_1$ n'est plus symétrique par rapport à l'intervalle $[f_{DFRT-}, f_{DFRT+}]$. Ainsi, $A_{DFRT-}$ est différente de $A_{DFRT+}$ et le circuit comparateur COMP génère un signal qui active le régulateur PID. Le régulateur PID modifie alors la consigne en fréquence $f_1$ portée par le signal de commande $V_{cont}$. Le régulateur PID est configuré pour agir sur la fréquence $f_1$ de manière à f maintenir les amplitudes $A_{DFRT+}$ et $A_{DFRT-}$ égales entre elles. Cela permet d'ajuster en temps réel la fréquence $f_1$ avec les variations de la fréquence de résonance $f_0$.

Par exemple, le régulateur PID implémente un signal de consigne proportionnel à la différence des amplitudes $A_{DFRT+}$ et $A_{DFRT-}$ pour corriger la fréquence $f_1$ dans le sens de cette différence.

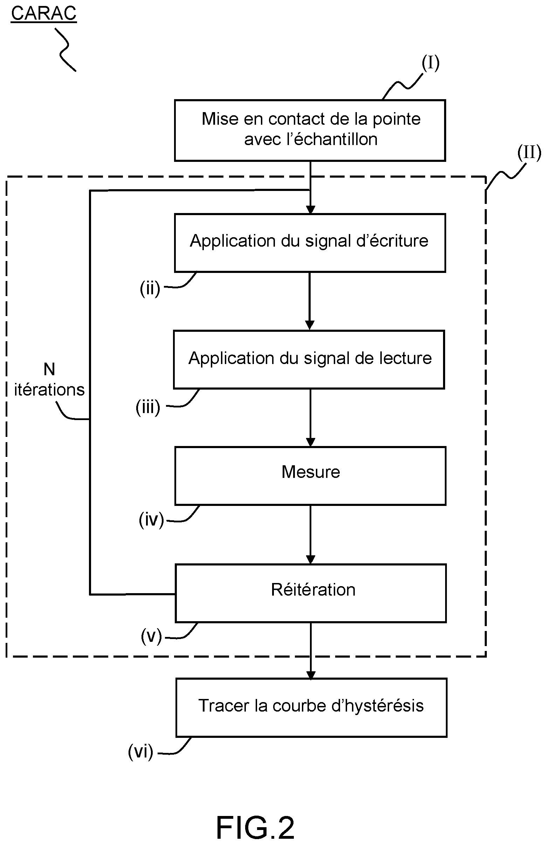

La figure 2 illustre un organigramme des étapes du procédé de caractérisation selon un premier mode de réalisation l'invention appliquée à un point N1 de la surface S1 de l'échantillon.

La première étape i) du procédé de caractérisation CARAC consiste à mettre la pointe conductrice P1 en contact avec la surface supérieure S1 au niveau du point N1 à caractériser.

La deuxième étape ii) consiste à appliquer pendant une durée d'écriture $\Delta t1$ entre l'électrode inférieure EL1 et la pointe conductrice P1, le signal de caractérisation $V_{CAR}(t))$ ayant une première composante continue $V_{DC1}$, la première fréquence $f_1$ et une première amplitude $V_0$.

$$V_{CAR}(t) = V_{DC1} + V_{AC}(t) = V_{DC1} + V_0 * \sin(2\pi f_1 t + \varphi)$$

avec $V_{DC1}$ la composante continue du signal $V_{CAR}(t)$ et $V_{AC}(t) = V_0 * \sin(2\pi f_1 t + \varphi)$ est sa composante alternative ayant une première amplitude $V_0$, la première fréquence $f_1$, et une phase initiale $\varphi$. La composante continue $V_{DC1}$ est constante pendant la durée d'écriture $\Delta t1$. La phase d'écriture consiste à stimuler l'échantillon localement au point N1 de manière à modifier la distribution de la polarisation électrique locale par effet ferroélectrique.

La troisième étape iii) consiste à appliquer, pendant une durée de lecture $\Delta t2$ entre l'électrode inférieure EL1 et la pointe conductrice P1, le signal de caractérisation $V_{CAR}(t)$ ayant ayant une seconde composante continue $V_{DC2}$ et variant selon la première fréquence $f_1$ et la première amplitude $V_0$.

$$V_{CAR}(t) = V_{DC2} + V_{AC}(t) = V_{DC2} + V_0 * \sin(2\pi f_1 t + \varphi)$$

La composante alternative du signal de caractérisation $V_{CAR}(t)$ est identique à celle appliquée pendant l'écriture. Ainsi, la fréquence $f_1$ et l'amplitude $V_0$ est la même. La composante continue $V_{DC2}$ est constante pendant la durée de lecture $\Delta t2$. La composante continue $V_{DC2}$ est différente de celle du appliquée pendant l'écriture. Le signal de caractérisation $V_{CAR}(t)$ pendant une lecture sert à stimuler électromécaniquement localement l'échantillon sans changer la polarisation du matériau affectée par l'étape d'écriture précédente. Cela permet de quantifier la réponse électromécanique locale avec la nouvelle distribution de polarisation électrique obtenue après la phase d'écriture.

Simultanément à l'étape iii), la quatrième étape iv) est réalisée pendant la durée de lecture $\Delta t2$. Elle consiste à mesurer, la réponse électromécanique en phase et en amplitude de l'échantillon E1. Cette étape est réalisée par les moyens d'acquisition constitués par la source laser SL1, la pointe L1, la photodiode PD1 et l'étage d'amplification AMP1.

La fréquence de travail $f_1$ est maintenue égale à la fréquence de résonance $f_0$ pendant l'exécution du procédé CARAC. L'entretien de l'égalité $f_1=f_0$ est réalisé par le mécanisme décrit précédemment.

L'ensemble des étapes ii) à iv) constitue une première itération I1 dans le procédé de caractérisation CARAC d'un point N1 de la surface. La cinquième étape v) consiste à réitérer les étapes ii) à iv) en faisant varier la première composante continue $V_{DC1}$ selon une fonction enveloppe périodique g(t). La pointe P1 est toujours maintenue en contact avec le point N1 de la surface S1.

La fonction enveloppe périodique g(t) présente une seconde fréquence $f_2$ inférieure à la première fréquence $f_1$. De plus, elle présente une seconde amplitude $V_2$ supérieure à la première amplitude $V_0$. Le nombre d'itérations $I_j$ des étapes ii) à iv) (j un entier naturel non nul) est choisi de manière à couvrir au moins une période de la fonction périodique g(t). Pour chaque itération $I_j$, on obtient un couple de valeurs (amplitude de sortie, phase de sortie) en réponse au signal de caractérisation $V_{CAR}(t)$. La fonction enveloppe g(t) module l'amplitude de la composante continue en écriture $V_{DC1}$. On obtient ainsi d'une itération à une autre une variation de valeur de $V_{DC1}$ tout en gardant la valeur de la composante continue en lecture $V_{DC2}$ constante.

La sixième étape vi) consiste à tracer une courbe d'hystérésis à l'aide du calculateur CALC qui reçoit le signal de mesure $V_s(t)$ en temps réel. La courbe d'hystérésis correspond à l'hystérésis locale de l'amplitude et/ou de la phase associée au point N1 à partir des mesures obtenues pour chaque itération $I_j$ à l'issue de l'étape iv).

Optionnellement, le procédé de caractérisation CARAC comprend une septième étape consistant à générer une liste comprenant une quantification de plusieurs caractéristiques ferroélectriques extraites à partir de la courbe d'hystérésis associée au point N1. À titre d'exemple non limitatif, la liste L1 couvre les caractéristiques suivantes du point N1 :

- La réponse électromécanique locale de l'échantillon à la saturation,

- La réponse électromécanique locale de l'échantillon rémanente,

- Les tensions coercitives pour lesquelles la réponse s'annule,

- La tension de nucléation, pour laquelle on commence à faire croitre un nouveau domaine,

- L'aire de la courbe d'hystérésis,

- Amplitude rémanente,

- Amplitude à la saturation,

- La composante affine de la courbe d'hystérésis, et

- Le décalage de la courbe d'hystérésis (offset en anglais).

On décrit à présent en détail chaque étape du procédé de la figure 2.

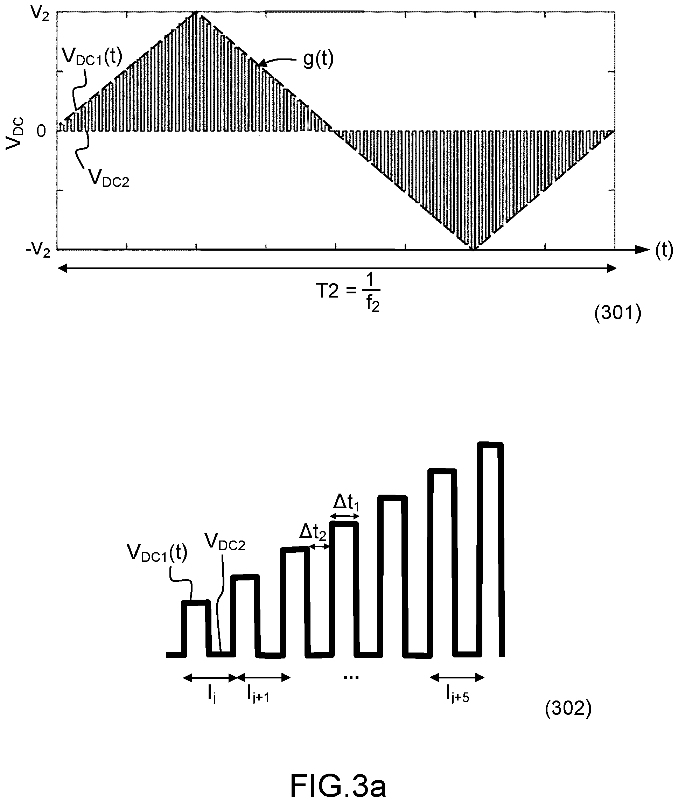

La figure 3a illustre un premier mode de réalisation de la variation au cours du temps de la composante continue $V_{DC}(t)$ du signal de caractérisation $V_{CAR}$ afin de réaliser une pluralité d'itérations des étapes ii) à iv).

Le diagramme 301 illustre une période T2 de la fonction périodique g(t). La composante continue $V_{DC}(t)$ varie dans ce cas selon un signal triangulaire périodique modulé par un signal créneau. La période T2 est l'inverse de la seconde fréquence $f_2$ inférieure à la première fréquence $f_1$.

Le diagramme 302 illustre un zoom partiel sur la courbe de variation de la composante continue $V_{DC}(t)$. Un état haut correspond à une étape ii) d'écriture. Un état bas correspond à une étape iii) de lecture. La succession de deux étapes ii) et iii) correspond à une itération $I_j$. Ainsi, la valeur moyenne de $V_{DC}(t)$ pendant une période correspond à la composante continue $V_{DC2}$. Pour chaque itération $I_j$, le plateau d'une impulsion correspond à la composante continue $V_{DC1}$ du signal de caractérisation $V_{CAR}(t)$ lors de l'écriture. On représente ici à titre d'exemple les itérations I1 à I7 comprenant chacune une étape de lecture et une étape d'écriture.

La variation de la composante continue $V_{DC1}$ du signal de $V_{CAR}(t)$ (en écriture), d'une itération à une autre, permet de tracer une courbe d'hystérésis. En effet, la composante continue $V_{DC1}$ décrit pendant une période T2, la plage de valeurs comprise entre $-V_2$ et $+V_2$ ; $V_2$ étant l'amplitude de la fonction enveloppe g(t).

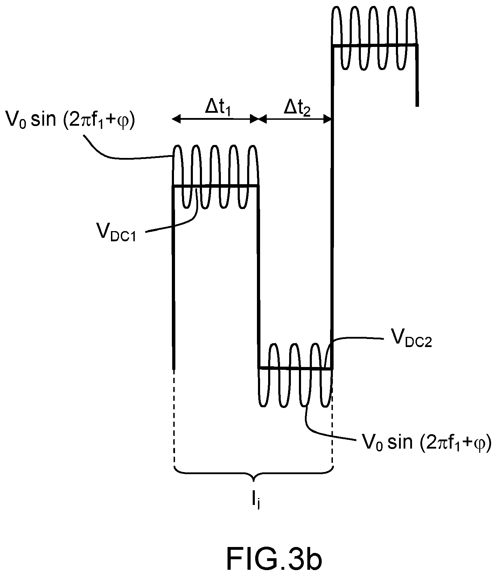

La figure 3b illustre un un zoom partiel sur le signal de caractérisation $V_{CAR}(t)$ pendant une itération $I_j$. On illustre sur cette figure la composante continue variable selon l'étape réalisée (lecture ou écriture) et la composante alternative commune aux deux étapes de lecture et d'écriture.

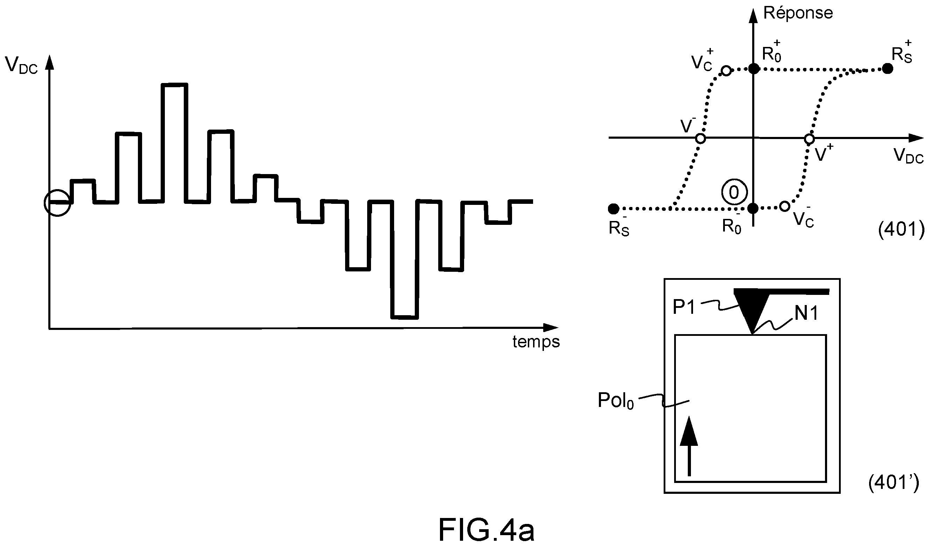

Nous allons décrire dans ce qui suit le mécanisme physique de lecture et d'écriture afin de déterminer les caractéristiques ferroélectriques au niveau d'un point N1 de la surface S1. Les figures 4a-4g illustrent une succession d'itérations du procédé de caractérisation selon l'invention appliquée audit point de la surface.

La figure 4a illustre une étape de lecture initiale. La pointe P1 est en contact avec la surface au niveau du point N1. Le générateur G1 est configuré pour appliquer entre la pointe P1 et l'électrode inférieure EL1 un signal de caractérisation ayant une fréquence $f_1 = f_0$. Le signal de caractérisation présente une composante continue $V_{DC2}$ = 0V. L'amplitude de sortie du signal mesuré $V_s(t)$ à l'origine est déterminée et elle correspond au point « 0 » de la courbe 401. La vue en coupe 401' illustre la polarisation électrique initiale locale de l'échantillon ferroélectrique. À titre d'exemple illustratif non limitatif, on suppose que la polarisation est orientée vers le haut. On note le domaine de polarisation électrique initial Pol0.

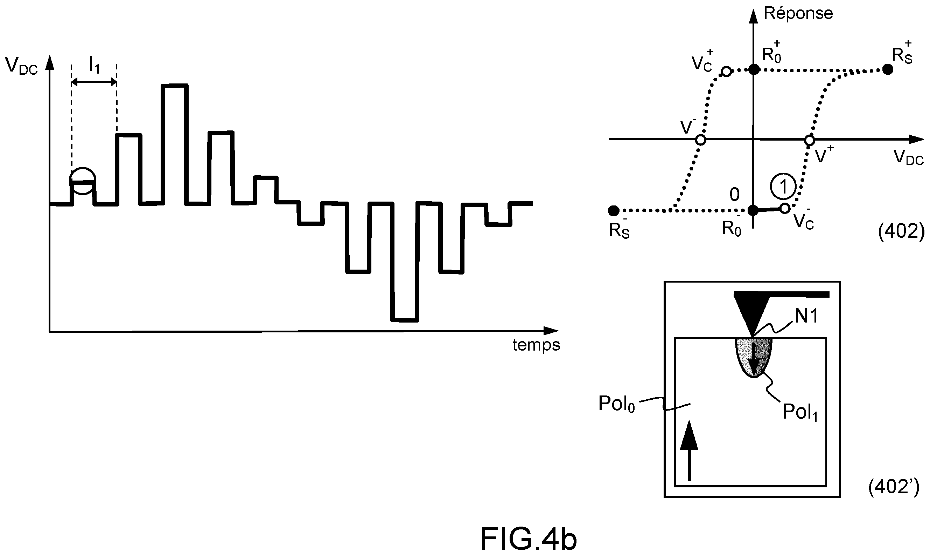

La figure 4b illustre le déroulement de la première itération $I_1$. Le générateur G1 est configuré pour appliquer entre la pointe P1 et l'électrode inférieure EL1 un signal de caractérisation ayant une fréquence $f_1 = f_0$. Lors d'une écriture, le signal de caractérisation présente une composante continue strictement positive $V_{DC1}$ > 0V. Cela provoque la formation locale d'un domaine ferroélectrique Pol1 de polarisation orientée vers le bas comme illustré sur la vue en coupe 402'. Ensuite, un front descendant à $V_{DC2}$ = 0 déclenche une étape de lecture associée à la première itération $I_1$. Lors de l'étape de lecture, la réponse électromécanique (phase et amplitude) du domaine ferroélectrique créé Pol1 (vers le bas), s'oppose à celle du domaine périphérique PolO, orienté dans le sens inverse. L'amplitude de sortie associée à l'itération $I_1$ correspond au point « 1 » de la courbe 402.

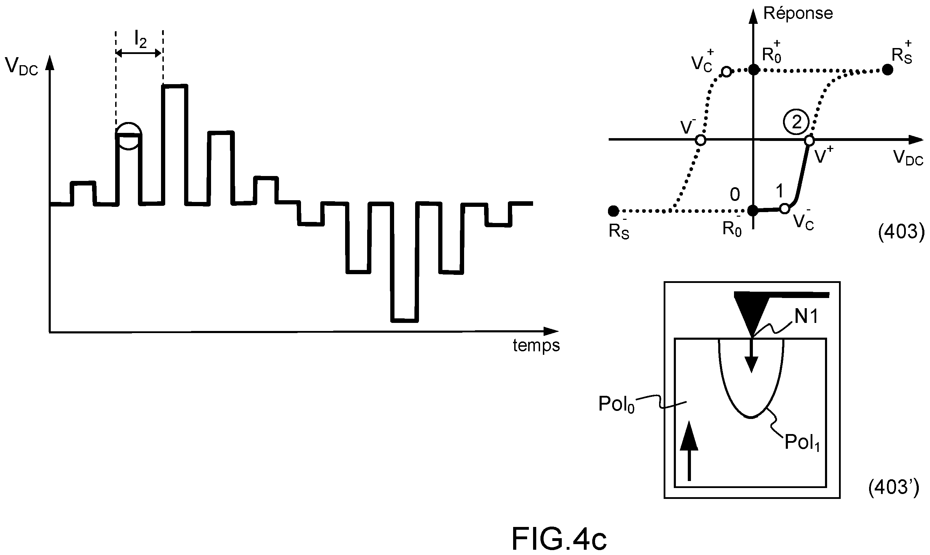

La figure 4c illustre le déroulement de la seconde itération $I_2$. Pendant l'étape d'écriture, l'amplitude de la composante continue $V_{DC1}$ est augmentée par rapport à l'itération précédente. Le domaine ferroélectrique créé (vers le bas) croit. Le changement de la réponse électromécanique continue jusqu'à atteindre un point nul noté «2». Il y a compensation mutuelle entre : d'une part, l'effet du domaine ferroélectrique créé localement vers le bas ; et d'autre part l'effet du domaine ferroélectrique périphérique orienté vers le haut.

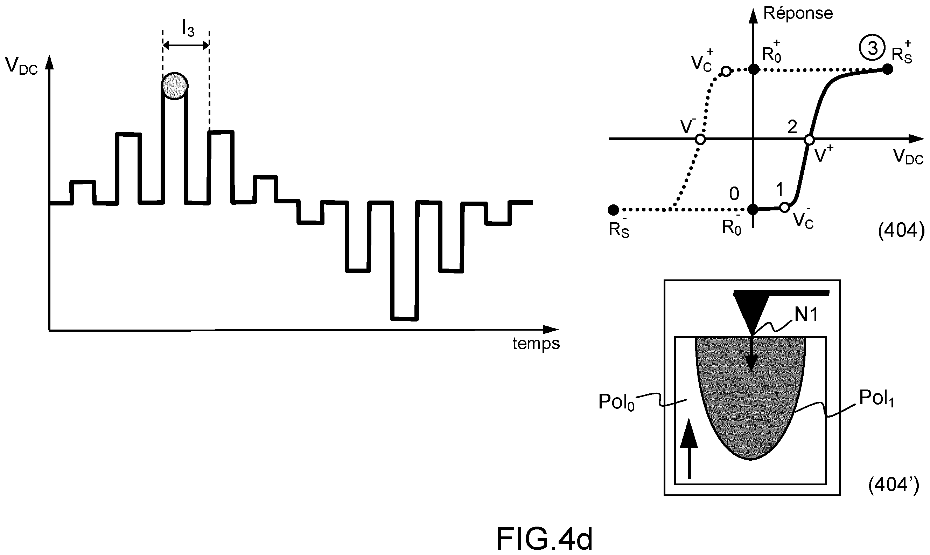

La figure 4d illustre le déroulement de la quatrième itération $I_4$. Pendant l'étape d'écriture, l'amplitude de la

composante continue $V_{DC1}$ est augmentée par rapport à l'itération précédente. Le domaine ferroélectrique créé (vers le bas) continue à croitre. Le changement de la réponse électromécanique continue jusqu'à atteindre un point de saturation noté «3». La réponse électromécanique est induite essentiellement par l'effet prédominant du domaine ferroélectrique créé.

Pendant les itérations I5 et I6, l'amplitude de la composante continue $V_{DC1}$ est diminuée jusqu'à atteindre 0. La réponse reste toujours égale à la valeur de saturation obtenue à l'issue de la quatrième itération $I_4$.

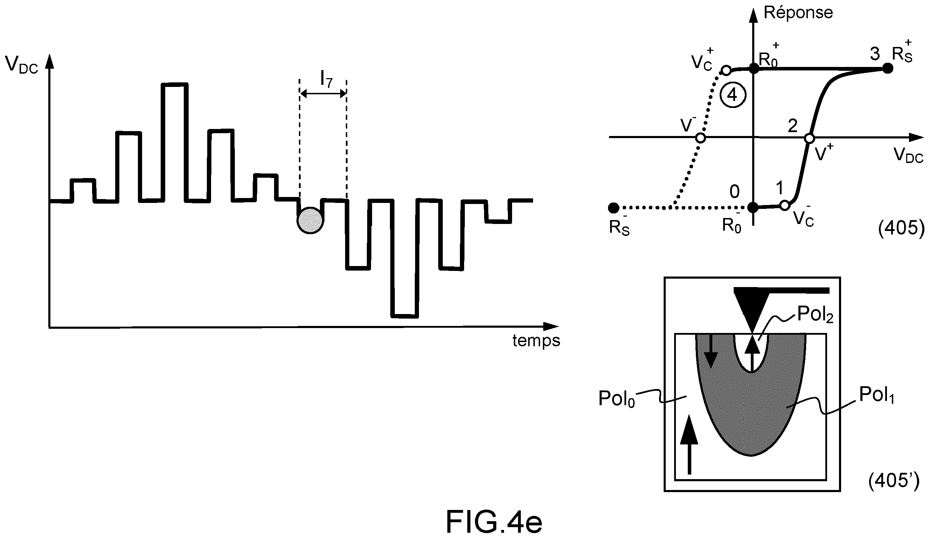

La figure 4e illustre le déroulement de la septième itération $I_7$. Pendant l'étape d'écriture, le signal de caractérisation présente une composante continue strictement négative $V_{DC1} < 0V$. Cela provoque la formation locale d'un second domaine ferroélectrique de polarisation orientée vers le haut dans le premier domaine ferroélectrique de polarisation orientée vers le bas. La polarisation du second domaine local s'oppose à celle du premier domaine localement créé. La réponse électromécanique (amplitude dans ce cas) commence à diminuer par rapport au seuil de saturation précédemment atteinte. L'amplitude de sortie associée à l'itération $I_1$ correspond au point « 4 » de la courbe 405'.

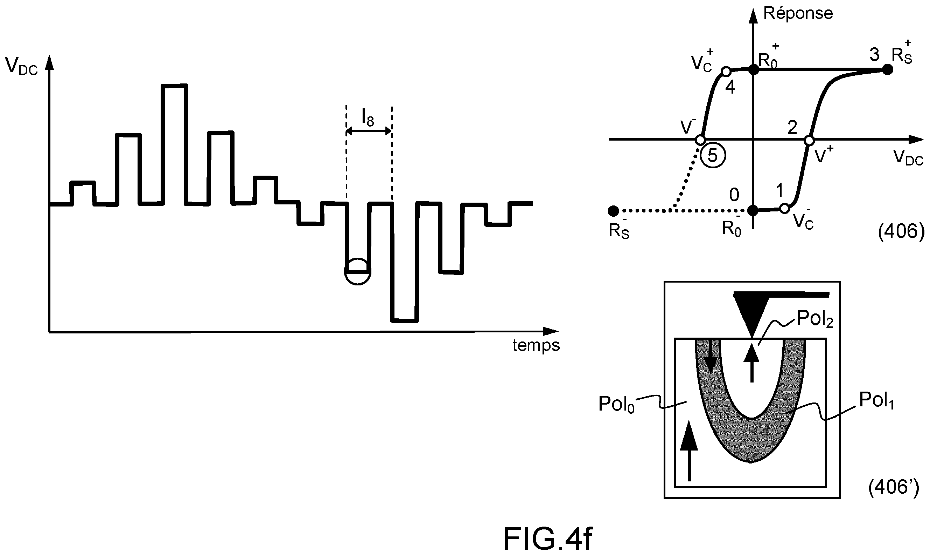

La figure 4f illustre le déroulement de la huitième itération $I_8$. Pendant l'étape d'écriture, la valeur de la composante continue $V_{DC1}$ est diminuée par rapport à l'itération précédente. Le domaine ferroélectrique créé (vers le bas) continue à croitre. Le changement de la réponse électromécanique continue jusqu'à atteindre un point nul noté «5». Il y a compensation mutuelle entre : d'une part, l'effet du domaine ferroélectrique créé localement vers le haut ; et d'autre part l'effet du domaine ferroélectrique créé localement vers le bas.

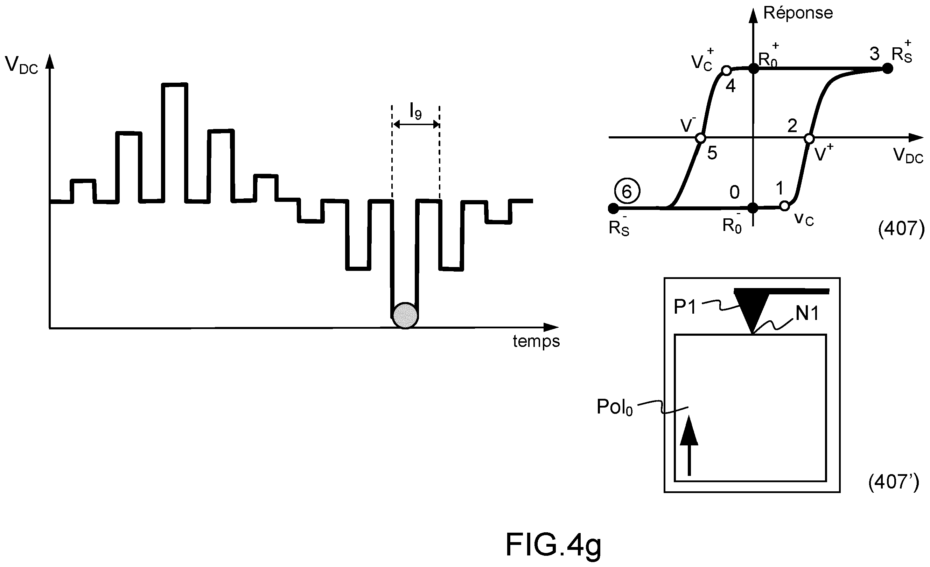

La figure 4g illustre le déroulement de la neuvième itération I9. Pendant l'étape d'écriture, la valeur de la composante continue $V_{DC1}$ est diminuée par rapport à l'itération précédente. Le domaine ferroélectrique créé (vers le bas) continue à croitre jusqu'à faire disparaître le domaine local orienté vers le haut. On retrouve l'état ferroélectrique d'origine de l'environnement local du point N1. Le changement de la réponse électromécanique continue jusqu'à atteindre un point de saturation noté «6». La réponse électromécanique est induite essentiellement par l'effet prédominant du domaine ferroélectrique créé.

On obtient ainsi suite à une période de la fonction enveloppe g(t), les points de mesure nécessaires pour tracer une courbe d'hystérésis d'amplitude et/ou de phase associée au point N1 à partir des mesures obtenues à l'étape iv).

Afin de démontrer les avantages du procédé selon l'invention, nous allons comparer les signaux de mesures d'un procédé selon l'état de l'art à ceux du procédé selon l'invention.

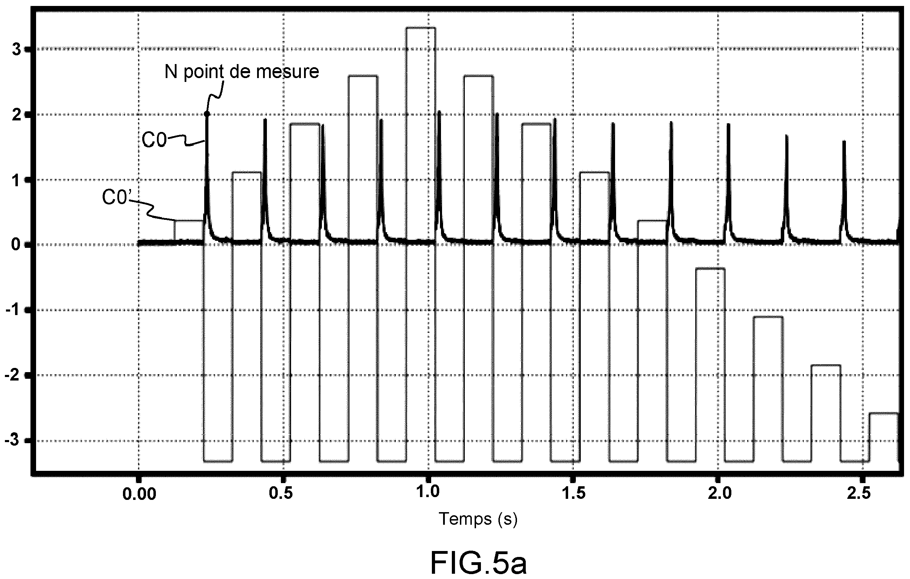

La figure 5a illustre le signal mesuré C0 (à la sortie de l'étage amplificateur AMP1) et le signal de caractérisation C0' avec un procédé de caractérisation SS-PFM selon l'état de l'art, plus particulièrement un procédé avec « balayage fréquentiel ». Pour chaque itération du procédé, et pendant chaque étape de lecture et d'écriture, la « fréquence de travail » $f_1$ est variée. La variation couvre une plage de fréquences qui doit comprendre la valeur de la fréquence de résonance $f_0$. Pendant, la lecture, une seule valeur correspond à la valeur du pic de résonance. Ce point est déterminé en cherchant le maximum de l'amplitude mesurée du signal C0 pendant une phase de lecture. Nous rappelons que le pic de résonance n'est pas connu au préalable car il peut dériver de sa valeur initiale pendant la caractérisation. On observe que pendant une fenêtre 2.5 secondes, 13 itérations sont réalisées. À l'issue de chaque itération, un seul point de mesure est exploitable pour tracer la courbe d'hystérésis en résonance.

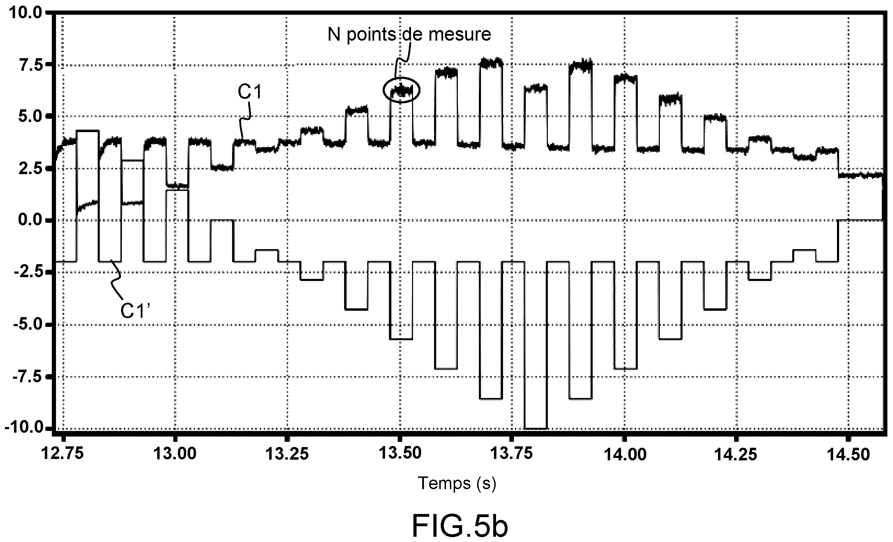

La figure 5b illustre le signal mesuré C1 et le signal de caractérisation C1' avec le procédé de caractérisation selon l'invention. La « fréquence de travail » $f_1$ est toujours maintenue égale à la fréquence de résonance $f_0$ en suivant ses fluctuations. Pendant, chaque itération il est possible de réaliser successivement une pluralité de mesures de la réponse électromécanique en phase et en amplitude de l'échantillon. En effet, chaque point mesuré de l'amplitude du signal C1 pendant la phase de lecture correspond à un fonctionnement en résonance. On observe que pendant une fenêtre 1.7 secondes, 17 itérations sont réalisées. A l'issue de chaque itération, une pluralité de points (de l'ordre de quelques centaines de points) de mesure sont exploitables pour tracer la courbe d'hystérésis car ils correspondent tous à un fonctionnement en résonance.

Ainsi, le procédé de caractérisation selon l'invention présente un gain considérable en temps d'exécution et en quantité de mesures utiles. Cela permet de réduire les besoins en ressources de calcul et de stockage des données de mesures pendant la caractérisation.

Avantageusement, il est possible d'améliorer la fiabilité des mesures en réalisant des traitements statistiques de la pluralité de points de mesures associés à une seule itération. Cela n'est pas possible avec les procédés en « balayage fréquentiel » qui présentent un seul point utile par itération. Dans ce cas, l'étape v) comprend les sous-étapes suivantes :

- réaliser successivement une pluralité de mesures de la réponse électromécanique en phase et en amplitude de l'échantillon, et

- réaliser des traitements statistiques de la pluralité de mesures de type moyenne et/ou écart-type.

Il devient alors possible d'évaluer la pertinence des mesures et d'augmenter la fiabilité du procédé de caractérisation.

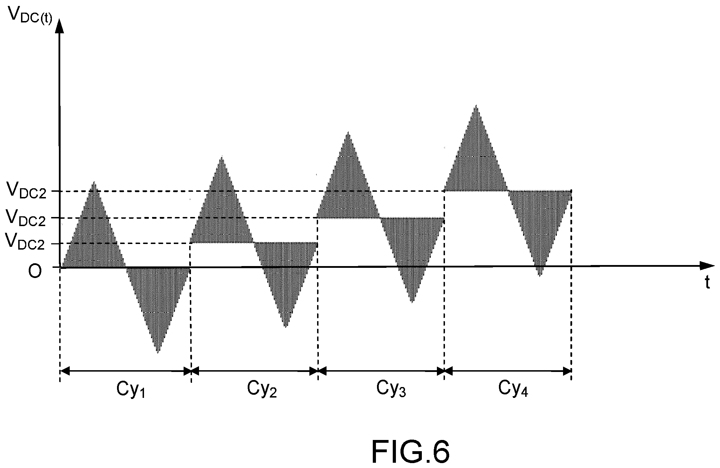

La figure 6 illustre un second mode de réalisation de la variation de la composante continue du signal de caractérisation du procédé de caractérisation CARAC appliqué à un seul point N1 de la surface S1. Dans ce mode de réalisation, plusieurs périodes T2 de signal enveloppe g(t) sont appliquées. La composante continue de lecture $V_{DC2}$ est variée pour chaque période de la fonction enveloppe g(t). À titre d'exemple, La composante continue de lecture $V_{DC2}$ est supérieure à celle de la période T2 précédente. A l'issue de chaque période T2, une courbe hystérésis est obtenue via le mécanisme décrit précédemment. On associe ainsi à chaque valeur de $V_{DC2}$, une courbe hystérésis. Cela sert à minimiser l'effet électrostatique qui peut réduire la fiabilité des résultats de mesure. En effet, l'effet électrostatique sur une courbe en hystérésis se manifeste de deux manières :

1- le premier effet consiste à l'augmentation de la pente de la partie de saturation supérieure (segment de 3 à 4 sur la figure 4g) sur la figure 4g et/ou inférieure (segment de 6 à 1 sur la figure 4g) de la courbe d'hystérésis. La partie de saturation supérieure (ou inférieure) d'une courbe d'hystérésis est dénommée « la portion de saturation », et

2- le second effet consiste au décalage de la courbe d'hystérésis vers le haut ou vers le bas (offset en anglais).

Avantageusement, le procédé de caractérisation comprend en outre une étape de sélection d'une courbe d'hystérésis parmi la pluralité de courbes d'hystérésis selon un critère de sélection prédéterminé. Le critère de sélection peut être la minimisation de la pente d'une portion de saturation choisie. Alternativement, le critère de sélection peut être la minimisation du décalage (offset) en centrant la courbe d'hystérésis par rapport à l'origine (0,0). Cela permet de minimiser la perturbation de l'effet électrostatique et améliorer la précision de la caractérisation.

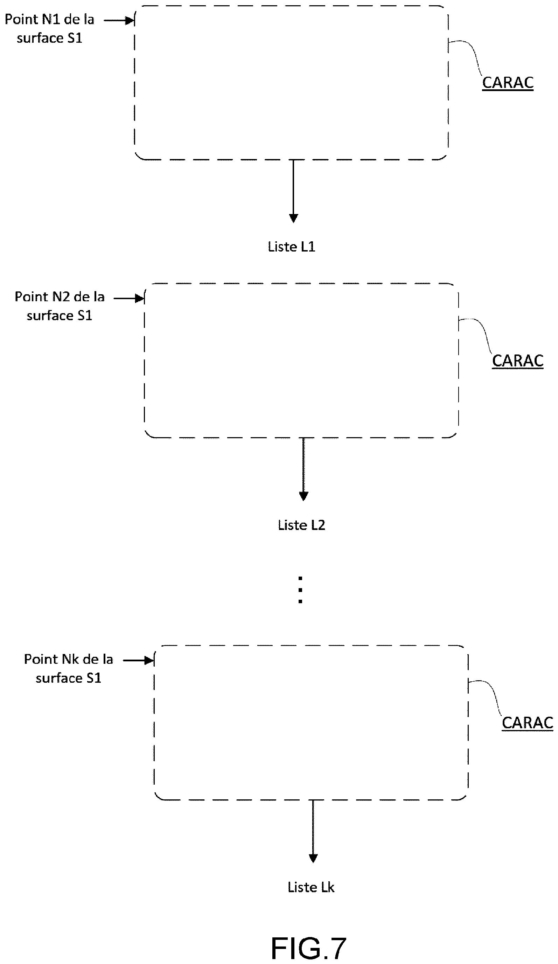

La figure 7 illustre un organigramme des étapes du procédé de caractérisation selon l'invention appliqué à une pluralité de points de la surface de l'échantillon.

L'ensemble des étapes i) à vii) sont réalisés pour une pluralité de points N1 à Nk (k un entier strictement positif) de manière à balayer totalement ou partiellement la surface S1. On obtient ainsi une pluralité de listes L1 à Lk chacune associée à un point de la surface S1. Chaque liste L1 à Lk comprend une quantification des caractéristiques ferroélectriques tel que la réponse électromécanique locale en saturation, la réponse électromécanique locale rémanente, les tensions coercitives, la tension de nucléation, l'aire de la courbe hystérésis, l'amplitude rémanente, l'amplitude à la saturation, la composante affine de la courbe d'hystérésis et le décalage de la courbe d'hystérésis (offset en anglais). De plus, il est envisageable d'extraire des mesures des propriétés électrostatiques de l'échantillon, des informations sur les variations des propriétés mécaniques locales du matériau grâce à l'acquisition de la fréquence de résonance par exemple. Il est aussi envisageable d'extraire le coefficient piézoélectrique d33 qui correspond à la partie linéaire de la courbe d'hystérésis en amplitude PFM. Avantageusement, le procédé de caractérisation selon l'invention comprend en outre une étape de cartographie. Pour chaque caractéristique ferroélectrique extraite des listes L1 à Lk, on génère une cartographie associée de la surface à partir des listes préalablement obtenues. On réalise ainsi une imagerie de la surface de l'échantillon permettant d'exploiter les caractéristiques piézoélectrique et ferroélectrique de la surface S1 de l'échantillon.

**Revendications**

1. Dispositif de caractérisation (D1) d'un échantillon piézoélectrique (E1) ayant une électrode inférieure (EL1) et une surface supérieure (S1), le dispositif comprenant :

    - une pointe conductrice (P1) placée à une extrémité d'un levier (L1) et destinée à être placée en contact avec un point (N1) de la surface supérieure (S1) ; l'ensemble formé par la pointe, l'échantillon et l'électrode inférieure ayant une fréquence de résonance variable ($f_0$) ;
    - un générateur de tension (G1) configuré pour appliquer, entre l'électrode inférieure (EL1) et la pointe conductrice (P1), un signal de caractérisation ($V_{CAR}$) à une première fréquence ($f_1$) ;
    - une chaine d'acquisition (21) configurée pour générer un signal de mesure ($V_s$) de la réponse électromécanique de l'échantillon ;
    - un circuit de commande (20) configuré pour commander le générateur de tension (G1) en générant un signal de commande ($V_{cont}$) à partir du signal de mesure ($V_s$) reçu par l'intermédiaire d'une boucle de rétroaction ; et

    la première fréquence ($f_1$) étant maintenue égale à la fréquence de résonance ($f_0$) par le circuit de commande (20).

2. Dispositif de caractérisation (D1) selon la revendication 1 comprenant en outre un calculateur (CALC) configuré pour tracer une courbe d'hystérésis d'amplitude et/ou de phase associée au point (N1) à partir du signal de mesure ($V_s$).

**3.** Dispositif de caractérisation (D1) selon l'une des revendications 1 ou 2 dans lequel le générateur (G1) est configuré pour générer en outre :

- un premier signal de redressement ($V_{DFRT+}$) à une deuxième fréquence ($f_{DFRT+}$) supérieure à la première fréquence ($f_1$) ;
- un second signal de redressement ($V_{DFRT-}$) à une troisième fréquence ($f_{DFRT-}$) inférieure à la première fréquence ($f_1$) ;
les deux signaux de redressement ($V_{DFRT-}$, $V_{DFRT+}$) présentant respectivement une amplitude inférieure à celle du signal de caractérisation ($V_{CAR}$) et étant superposées avec le signal de caractérisation ($V_{CAR}$) ; et
la deuxième fréquence ($f_{DFRT+}$) et la troisième fréquence ($f_{DFRT-}$) étant équidistantes de la première fréquence ($f_0$).

**4.** Dispositif de caractérisation (D1) selon la revendication 3 dans lequel le signal de mesure (Vs) comprend une première composante spectrale associée à la première fréquence ($f_1$), une seconde composante spectrale associée à la deuxième fréquence ($f_{DFRT+}$) et une troisième composante spectrale associée à la troisième fréquence ($f_{DFRT-}$) ; et dans lequel le circuit de commande (20) comprend un premier filtre (FIL1) destiné à extraire la seconde composante spectrale ($V_s(f_{DFRT+})$) et un second filtre (FIL2) destiné à extraire la troisième composante spectrale ($V_s(f_{DFRT-})$).

**5.** Dispositif de caractérisation (D1) selon la revendication 4 dans lequel le circuit de commande (20) comprend un circuit comparateur (COMP) configuré pour estimer si l'amplitude de la seconde composante spectrale ($V_s(f_{DFRT+})$) est égale à celle de la troisième composante spectrale ($V_s(f_{DFRT-})$).

**6.** Dispositif de caractérisation (D1) selon l'une quelconque des revendications 4 ou 5 dans lequel le circuit de commande (20) comprend un régulateur (PID) pour générer le signal de commande ($V_{cont}$) de manière à maintenir une égalité entre l'amplitude de la seconde composante spectrale ($V_s(f_{DFRT+})$) et celle de la troisième composante spectrale ($V_s(f_{DFRT-})$).

**7.** Procédé de caractérisation (CARAC) d'un échantillon piézoélectrique (E1) ayant une électrode inférieure (EL1) et une surface supérieure (S1), ledit procédé étant destiné à déterminer les propriétés ferroélectriques d'au moins un point (N1) de la surface (S1) dudit échantillon (E1), le procédé étant réalisé par un dispositif (1) selon l'une quelconque des revendications 1 à 6, le procédé comprenant les étapes suivantes pour l'au moins un point (N1) :

I- Mettre la pointe conductrice (P1) en contact avec la surface supérieure (S1) au niveau du point (N1) ; l'ensemble formé par le levier, la pointe, l'échantillon et l'électrode inférieure ayant une fréquence de résonance variable ($f_0$) ; et
II- Appliquer entre l'électrode inférieure (EL1) et la pointe conductrice (P1), un signal de caractérisation ($V_{CAR}$) à une première fréquence ($f_1$) de manière à modifier localement la distribution de la polarisation électrique locale pendant une phase d'écriture et mesurer la réponse électromécanique pendant une phase de lecture.

la première fréquence ($f_1$) étant maintenue égale à la fréquence de résonance ($f_0$).

**8.** Procédé de caractérisation (CARAC) selon la revendication 7 dans lequel l'étape II) comprend les sous-étapes suivantes :

ii- Appliquer pendant une durée d'écriture ($\Delta t1$) entre l'électrode inférieure (EL1) et la pointe conductrice (P1), le signal de caractérisation ($V_{CAR}(t)$) ayant une première composante continue ($V_{DC1}$) et une première amplitude ($V_0$) ;
iii- Appliquer pendant une durée de lecture ($\Delta t2$) entre l'électrode inférieure(EL1) et la pointe conductrice (P1), le signal de caractérisation ($V_{CAR}(t)$) ayant une seconde composante continue ($V_{DC2}$) et la première amplitude ($V_0$) ;
iv- Mesurer, simultanément avec iii), la réponse électromécanique en phase et en amplitude de l'échantillon (E1) ; et
v- Réitérer les étapes ii) à iv) en faisant varier la première composante continue ($V_{DC1}$) selon une fonction enveloppe périodique (g(t)) ayant une seconde fréquence ($f_2$) inférieure à la première fréquence ($f_1$), et ayant une seconde amplitude ($V_2$) supérieure à la première amplitude ($V_1$) ; le nombre d'itérations (I1, I2, I3, I4) étant suffisant pour réaliser au moins une période de la fonction périodique (g(t)).

**9.** Procédé de caractérisation (CARAC) selon la revendication 8 comprenant en outre l'étape suivante :

vi- Tracer une courbe d'hystérésis d'amplitude et/ou de phase associée au point (N1) à partir des mesures obtenues à l'étape iv) de chaque itération (I1, I2, I3, I4).

10. Procédé de caractérisation (CARAC) selon la revendication 9, dans lequel pour l'au moins un point (N1) les étapes ii) à vi) sont réitérées en faisant varier pour chaque cycle (Cy1, Cy2, Cy3, Cy4) la seconde composante continue ($V_{DC2}$) afin d'obtenir une pluralité de courbes d'hystérésis, chacune étant associée à une valeur de la seconde composante continue ($V_{DC2}$).

11. Procédé de caractérisation (CARAC) selon la revendication 10 comprenant en outre l'étape suivante pour l'au moins un point (N1) :
sélectionner une courbe d'hystérésis parmi la pluralité de courbes d'hystérésis selon un critère de sélection prédéterminé.

12. Procédé de caractérisation (CARAC) selon la revendication 11 dans lequel le critère de sélection prédéterminé correspond à la courbe d'hystérésis ayant une portion de saturation ayant une pente minimum ou un décalage par rapport à l'origine minimum.

13. Procédé de caractérisation (CARAC) selon l'une quelconque des revendications 8 à 12, dans lequel la sous-étape iii) comprend la réalisation successivement une pluralité de mesures de la réponse électromécanique en phase et en amplitude de l'échantillon (E1).

14. Procédé de caractérisation (CARAC) selon la revendication 13, comprenant en outre l'étape suivante :

- pour chaque phase de lecture, réaliser des traitements statistiques de la pluralité de mesures de type moyenne et/ou écart-type.

15. Procédé de caractérisation (CARAC) selon l'une quelconque des revendications 8 à 14, le procédé étant appliqué à une pluralité de points (N1, N2 N3, N4) de la surface (S1) et comprenant en outre l'étape suivante après l'étape v): pour chaque point (N1, N2 N3, N4) caractérisé, générer une liste comprenant une quantification de plusieurs caractéristiques ferroélectriques et piézoélectriques et/ou électrostatiques extraites à partir de la courbe d'hystérésis associée audit point.

16. Procédé de caractérisation (CARAC) selon la revendication 15, comprenant en outre l'étape suivante :

- pour chaque caractéristique ferroélectrique extraite, générer une cartographie associée de la surface (S1) à partir des listes.

FIG.1a

EP 4 276 476 A1

FIG.1b

FIG.1c

EP 4 276 476 A1

CARAC

(I)

Mise en contact de la pointe
avec l'échantillon

(II)

Application du signal d'écriture

(ii)

Application du signal de lecture

(iii)

N
itérations

Mesure

(iv)

Réitération

(v)

Tracer la courbe d'hystérésis

(vi)

FIG.2

(301)

(302)

FIG.3a

FIG.3b

EP 4 276 476 A1

$V_{DC}$

temps

Réponse

$V_C^+$ $R_0^+$ $R_S^+$

$V^-$ $V^+$ $V_{DC}$

$R_S^-$ (0) $R_0^-$ $V_C^-$

(401)

P1 N1

Pol$_0$

(401')

FIG.4a

FIG.4b

FIG.4c

EP 4 276 476 A1

FIG.4d

EP 4 276 476 A1

FIG.4e

EP 4 276 476 A1

FIG.4f

EP 4 276 476 A1

FIG.4g

EP 4 276 476 A1

FIG.5a

FIG.5b

EP 4 276 476 A1

EP 4 276 476 A1

FIG.6

Point N1 de la
surface S1 →

CARAC

↓

Liste L1

Point N2 de la
surface S1 →

CARAC

↓

Liste L2

⋮

Point Nk de la
surface S1 →

CARAC

↓

Liste Lk

# FIG.7

Europäisches
Patentamt

European
Patent Office

Office européen
des brevets

**RAPPORT DE RECHERCHE EUROPEENNE**

Numéro de la demande

EP 23 17 2891

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | LIU YUANMING ET AL: "Thermal variation of piezoresponse in microscopically poled poly(vinylidene fluoride-trifluoroethylene) ferroelectric copolymers approaching Curie temperature", JOURNAL OF APPLIED PHYSICS, AMERICAN INSTITUTE OF PHYSICS, 2 HUNTINGTON QUADRANGLE, MELVILLE, NY 11747, vol. 110, no. 5, 1 septembre 2011 (2011-09-01), pages 52008-52008, XP012154189, ISSN: 0021-8979, DOI: 10.1063/1.3623774 [extrait le 2011-09-02] | 1-3,7-16 | INV. G01Q10/06 G01Q60/30 |
| A | * figures 1,3,5 * * alinéa [00II] * | 4-6 | |
| | ----- | | |
| X | BRIAN J RODRIGUEZ ET AL: "Dual-frequency resonance-tracking atomic force microscopy", NANOTECHNOLOGY, INSTITUTE OF PHYSICS PUBLISHING, BRISTOL, GB, vol. 18, no. 47, 28 novembre 2007 (2007-11-28), page 475504, XP020129515, ISSN: 0957-4484 | 1-6 | DOMAINES TECHNIQUES RECHERCHES (IPC) G01Q |
| A | * figure 2 * * page 2, colonne 2, alinéa 2 – page 3, colonne 1, alinéa 2 * | 7-16 | |
| | ----- | | |
| | -/-- | | |

Le présent rapport a été établi pour toutes les revendications

| Lieu de la recherche | Date d'achèvement de la recherche | Examinateur |
|---|---|---|
| Berlin | 15 septembre 2023 | Polesello, Paolo |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

.......................................................................
& : membre de la même famille, document correspondant

EPO FORM 1503 03.82 (P04C02)

page 1 de 2

Europäisches
Patentamt

European
Patent Office

Office européen
des brevets

# RAPPORT DE RECHERCHE EUROPEENNE

**Numéro de la demande**

EP 23 17 2891

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | JESSE STEPHEN ET AL: "Switching spectroscopy piezoresponse force microscopy of ferroelectric materials", APPLIED PHYSICS LETTERS, AMERICAN INSTITUTE OF PHYSICS, 2 HUNTINGTON QUADRANGLE, MELVILLE, NY 11747, vol. 88, no. 6, 9 février 2006 (2006-02-09), pages 62908-062908, XP012082773, ISSN: 0003-6951, DOI: 10.1063/1.2172216 * figures 1-2 * ----- | 1-16 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| Berlin | 15 septembre 2023 | Polesello, Paolo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 2 de 2